# EUROPÄISCHE PATENTANMELDUNG

(11) **EP 1 310 880 A1**
(43) Veröffentlichungstag der Anmeldung: **14.05.2003**
(21) Anmeldenummer: 01125748.2
(22) Anmeldetag: 29.10.2001
(51) Int. Cl.: G06F 13/40

(54) **Mikroprozessoranordnung**

(71) Anmelder: Festo AG & Co, 73734 Esslingen (DE); Beck IPC GmbH, 35578 Wetzlar (DE)
(72) Erfinder: Schlösser, Ernest, 35759-Driedorf-Heiligenborn (DE)
(74) Vertreter: Vetter, Hans, Dipl.-Phys. Dr.

(57) **Zusammenfassung**

Die Erfindung betrifft eine Mikroprozessoranordnung mit mindestens einem Mikroprozessor (14) und einem ersten und mindestens einem zweiten Schnittstellenmodul (16-18;19), über das der mindestens eine Mikroprozessor (14) Daten senden und/oder empfangen kann, und mit einer Kontaktanordnung (20), über die elektrische Verbindungen zu der Mikroprozessoranordnung (10) herstellbar sind, dadurch gekennzeichnet, dass sie eine Umschalteinrichtung (23) enthält, über die mindestens ein Kontakt der Kontaktanordnung (20) wahlweise dem ersten oder dem mindestens einen zweiten Schnittstellenmodul (16-18;19) in Abhängigkeit einer modifizierbaren Zuordnungstabelle (13; 13') zuordenbar ist.

## Beschreibung

Die Erfindung betrifft eine Mikroprozessoranordnung mit mindestens einem Mikroprozessor und einem ersten und mindestens einem zweiten Schnittstellenmodul, über das der mindestens eine Mikroprozessor Daten senden und/oder empfangen kann, und mit einer Kontaktanordnung, über die elektrische Verbindungen zu der Mirkoprozessoranordnung herstellbar sind.

Derartige Mikroprozessoranordnungen werden für vielfältige Steuer- und Überwachungszwecke, Kommunikationszwecke, Protokollwandler oder dergleichen eingesetzt. Teilweise werden derartige Mikroprozessoranordnungen auch als "Embedded Systems" oder Mikrocontroller bezeichnet.

Bei den bekannten Mikroprozessoranordnungen sind üblicherweise mehrere Schnittstellenmodule vorgesehen, mit denen beispielsweise serielle Daten gesendet und/oder empfangen werden können, eine Verbindung zum Internet hergestellt werden kann, ein Bus angeschlossen werden kann, zum Beispiel ein CAN-Bus (Controller Area Network), oder dergleichen. Insbesondere dann, wenn die Mikroprozessoranordnung mehrere Schnittstellenmodule enthält, können nicht für alle Schnittstellenmodule in ausreichender Zahl Kontakte zur Herstellung elektrischer Verbindungen bereit gestellt werden, da eine Mikroprozessoranordnung mit zahlreichen Kontakten verhältnismäßig teuer ist.

Es ist daher Aufgabe der Erfindung, bei einer Mikroprozessoranordnung der eingangs genannten Art die Bereitstellung von Kontakten der Kontaktanordnung für die Schnittstellenmodule zu optimieren.

Diese Aufgabe wird bei einer derartigen Mikroprozessoranordnung dadurch gelöst, dass sie eine Umschalteinrichtung enthält, über die mindestens ein Kontakt der Kontaktanordnung wahlweise dem ersten oder dem mindestens einen zweiten Schnittstellenmodul in Abhängigkeit einer modifizierbaren Zuordnungstabelle zuordenbar ist.

Diese Mikroprozessoranordnung kommt mit verhältnismäßig wenigen Kontakten aus, da diese optimal eingesetzt werden können. Je nach Bedarf werden die Kontakte mit Hilfe der Umschalteinrichtung den Schnittstellenmodulen zugewiesen. Es können also wesentlich mehr Schnittstellenmodule vorhanden sein als dafür an sich notwendige Kontakte. Die Mikroprozessoranordnung ist daher in der Herstellung wesentlich preisgünstiger und zudem günstiger anschließbar, da beispielsweise ein Sockel, in den die Kontaktanordnung steckbar ist, weniger Kontakte aufweisen muss.

Vorteilhafte Ausgestaltungen der Erfindung finden sich in den abhängigen Ansprüchen sowie in der Beschreibung.

Vorzugsweise enthält die Umschalteinrichtung elektronische Schaltkreise, die gemäß der Zuordnungstabelle programmierbar sind. Beispielsweise enthält die Umschalteinrichtung eine sogenannte Gatterlogik, mit der logische Verknüpfungen realisierbar sind, zum Beispiel AND, OR oder NOR. Die Umschalteinrichtung ist ganz oder zumindest teilweise in Hardware ausgeführt, so dass sie Datensignale von einem Kontakt zu einem Schnittstellenmodul oder umgekehrt optimal schnell und unverfälscht übertragen kann.

Zweckmäßigerweise ist die Zuordnungstabelle mit Hilfe des Mikroprozessors modifizierbar. Es ist aber auch denkbar, dass die Zuordnungstabelle und/oder die Umschalteinrichtung sozusagen von außen her programmierbar sind, beispielsweise durch ein mit der Umschalteinrichtung verbindbares Programmiergerät, zum Beispiel einen Personal Computer. Diese Variante ist insbesondere dann zweckmäßig, wenn, wie bei einer vorteilhaften Ausgestaltung der Erfindung vorgesehen ist, die Zuordnungstabelle in der Umschalteinrichtung abgelegt ist. Dabei ist es auch möglich, das die Zuordnungstabelle durch die jeweilige Schalteinstellung der Umschalteinrichtung repräsentiert ist. Bei dieser Variante der Erfindung ist die Umschalteinrichtung beispielsweise ein FPGA (Field Programmable Gate Array).

Vorteilhaft ist die Umschalteinrichtung eine vom Mikroprozessor, der sogenannten CPU (Central Processing Unit), separate Einheit.

Zweckmäßigerweise ist der Mikroprozessor zur Ausführung von Befehlscode von Anwendungssoftware vorgesehen. Dabei ist die Umschalteinrichtung von der Anwendungssoftware separat. Es kann zwar vorgesehen sein, dass eine Anwendungssoftware Daten auf einen bestimmten Kontakt, z.B. einen Kontakt-Pin, schreibt oder von diesem einliest, so dass auch auf diese Weise eine Zuordnung eines oder mehrerer Kontakte zu einem Schnittstellenmodul erzielt wird. Allerdings ist dies nicht zwingend, da eine derartigen Zuordnung auch mittels der erfindungsgemäßen Umschalteinrichtung möglich ist. Für die Anwendungssoftware ist es in jedem Fall vorteilhaft, wenn sie keine Zuordnung eines Schnittstellenmoduls zu einem Kontakt vorgeben muss, da sie dann leichter portierbar ist, dass heißt beispielsweise auf einer anders - insbesondere hinsichtlich ihrer Kontaktanordnung - aufgebauten Prozessoranordnung verwendbar ist. Die Anwendungssoftware nutzt die Umschalteinrichtung dabei zweckmäßigerweise zum Empfangen und/oder Senden von Daten auf einem oder mehreren Kontakten.

Für die Speicherung der Zuordnungstabelle bieten sich prinzipiell zwei verschiedene Möglichkeiten an: Sie kann.in einem flüchtigen Speicher, zum Beispiels RAM (Random Access Memory), oder einem nicht-flüchtigen Speicher, zum Beispiel ROM (Read Only Memory), abgelegt sein. Dabei sind Mischformen ohne weiteres möglich, dass heißt, das beispielsweise eine Basis-Zuordnungstabelle oder ein Basisteil einer Zuordnungstabelle in einem nicht-flüchtigen Speicher abgelegt ist, wohingegen ein anwendungsspezifischer Teil der Zuordnungstabelle oder eine anwendungsspezifische Zuordnungstabelle in einem flüchtigen Speicher abgelegt ist. Wenn die anwendungsspezifische Zuordnungstabelle im flüchtigen Speicher verloren geht, beispielsweise aufgrund eines Stromversorgungsausfalles, kann auf die Basis-Zuordnungstabelle oder auf den Basisteil der Zuordnungstabelle zurückgegriffen werden, so dass die Umschalteinrichtung zumindest einem Schnittstellenmodul Kontakte zuordnet. Über dieses Schnittstellenmodul kann dann beispielsweise die anwendungsspezifische Zuordnungstabelle neu konfiguriert werden.

Für den Fall, dass die Zuordnungstabelle zumindest teilweise in einem flüchtigen Speicher der Mikroprozessoranordnung abgelegt ist, ist es bevorzugt, dass dem flüchtigen Speicher eine separate Stromversorgungseinheit zum Erhalten von in den flüchtigen Speicher abgelegten Informationen zugeordnet ist. Der flüchtige Speicher kann in diesem Fall die Zuordnungstabelle auch dann erhalten, wenn die Spannungsversorgung der Mikroprozessoranordnung für eine vorbestimmte Zeitspanne unterbrochen ist.

Zweckmäßigerweise enthält die Mikroprozessoranordnung ein Bedienmodul, mit der die Zuordnungstabelle modifizierbar ist.

Das Bedienmodul kann beispielsweise eine Software sein, deren Befehlscode durch den Mikroprozessor, also die CPU, ausgeführt wird.

Zweckmäßigerweise bildet das Bedienmodul einen Bestandteil eines Betriebssystems der Mikroprozessoranordnung. Das Betriebssystem ist vorzugsweise in einem nicht-flüchtigen Speicher der Mikroprozessoranordnung abgelegt, so dass die Mikroprozessoranordnung zumindest in einem minimalen Umfang betriebsbereit ist, wenn sie mit Strom versorgt wird.

Zweckmäßigerweise ist die Mikroprozessoranordnung als integrierte Ein-Chip-Mikroprozessoranordnung ausgestaltet, deren Komponenten Bestandteile eines einzigen elektronischen Bausteins bilden. Eine derartige Mikroprozessoranordnung ist sehr kompakt.

Es ist zwar prinzipiell denkbar, dass nur verhältnismäßig wenige Kontakte der Kontaktanordnung mittels der Umschalteinrichtung den Schnittstellenmodulen zuordenbar sind. Allerdings ist es zweckmäßigerweise vorgesehen, dass die überwiegende Anzahl der Kontaktanordnung mit Hilfe der Umschalteinrichtung den Schnittstellenmodulen zuordenbar ist. Im Extremfall kann das heißen, dass alle Kontakte der Mikroprozessoranordnung mittels der Umschalteinrichtung zuordenbar sind bis auf diejenigen Kontakte, die eventuell für eine externe Stromversorgung der Mikroprozessoranordnung erforderlich sind.

Im folgenden wird die Erfindung anhand eines Ausführungsbeispiels unter zur Hilfenahme der Zeichnung näher erläutert. Es zeigen:

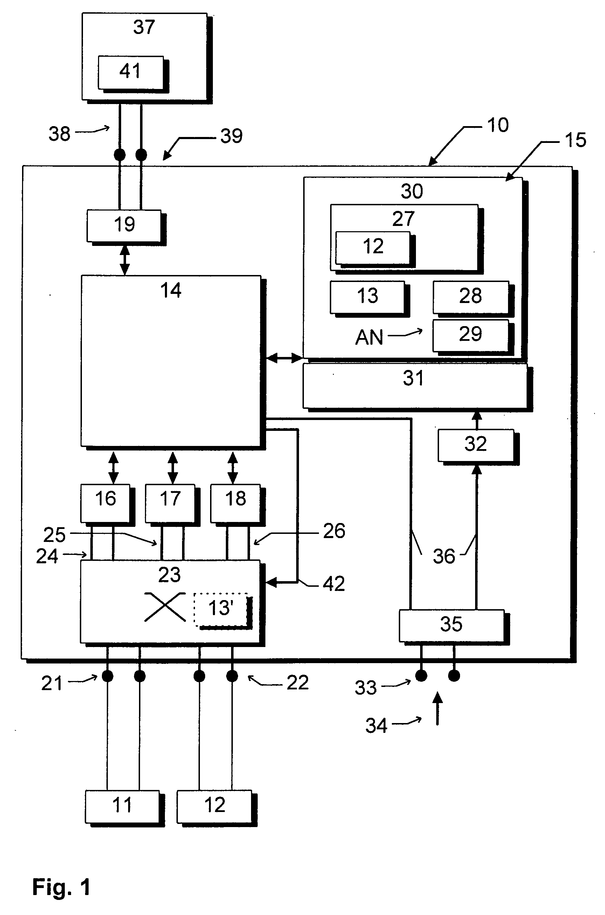

- Figur 1: eine erfindungsgemäße Mikroprozessoranordnung 10 zur Steuerung und Überwachung von Peripherieeinheiten 11, 12, und
- Figur 2: eine Zuordnungstabelle 13 für die Mikroprozessoranordnung 10 gemäß Figur 1.

Die Mikroprozessoranordnung 10 ist ein sogenanntes "Embedded System" und kann beispielsweise zur Steuerung industrieller Anlagen, zur Protokollkonvertierung, zur Prozessüberwachung oder zu sonstigen Zwecken eingesetzt werden. Die Mikroprozessoranordnung 10 ist in der Figur schematisch dargestellt, und dient z.B. zur Steuerung und Überwachung von Peripherieeinheiten 11, 12. Bei der Peripherieeinheit 11 handelt es sich beispielsweise um einen Massenspeicher, bei der Peripherieeinheit 12 beispielsweise um eine Sensoranordnung, zum Beispiel einen Wärmesensor, Lichtsensor oder dergleichen.

Die Mikroprozessoranordnung 10 enthält einen Mikroprozessor 14, der über Schnittstellenmodule 16 bis 19 Daten senden und/oder empfangen kann. Über eine Kontaktanordnung 20 können elektrische und/oder optische Verbindungen zur Mikroprozessoranordnung 10 hergestellt werden.

Kontakte 21, 22 der Kontaktanordnung 20 mit beispielsweise jeweils zwei als sogenannte Pins ausgestalteten Kontakten, sind mit einer Umschalteinrichtung 23 verbunden, über die die Schnittstellenmodule 16 bis 18 den Kontakten 21, 22 in Abhängigkeit einer Zuordnungstabelle 13 (und/oder einer Zuordnungstabelle 13') zuordenbar sind. Die Schnittstellenmodule 16 bis 18 sind über Verbindungsleitungen 24 bis 26 mit der Umschalteinrichtung 23 verbunden. Im Ausführungsbeispiel enthalten die Verbindungsleitungen 24 bis 26 jeweils zwei Verbindungsleitungen, die den als Kontaktpaare ausgestalteten Kontakten 21, 22 jeweils paarweise zuordenbar sind. Es versteht sich, dass auch jede Einzelleitung der Verbindungsleitungen 24 bis 26 jedem Einzelkontakt der Kontakte 21, 22 mit Hilfe der Umschalteinrichtung 23 individuell zuordenbar ist.

Bei den Schnittstellenmodulen 16 bis 18 handelt es sich beispielsweise um sogenannte UARTs (Universal Asynchronous Receiver Transmitter), mit denen Daten seriell gesendet oder empfangen werden können, um Ethernet Transceiver, zum Beispiels 10-Base-T oder 100-Base-T Schnittstellen, Bus-Schnittstellenmodule, zum Beispiel für einen CAN-Bus, SPI-Schnittstellenmodule (Serial Peripheral Interface) oder dergleichen. Ferner könnten die Schnittstellenmodule 16 bis 18 beispielweise zum Teil auch Analog-Digitalwandler oder Digital-Analogwandler sein.

Der Mikroprozessor 14 übermittelt den Schnittstellenmodulen 16 bis 18 beispielsweise digitale Daten oder empfängt von diesen digitale Daten. Die Kommunikationsbeziehungen zwischen dem Mikroprozessor 14 und den Schnittstellenmodulen 16 bis 18 sind durch Doppelpfeile angedeutet. Es ist möglich, das eines oder mehrere der Schnittstellenmodule 16 bis 19 in den Mikroprozessor 14 integriert sind, das heißt, dass dieser entsprechende elektrische Schaltkreise aufweist, mit denen die Schnittstellenfunktion des jeweiligen Schnittstellenmoduls 16 bis 19 realisiert ist.

Die Umschalteinrichtung 23 ist beim Ausführungsbeispiel eine vom Mikroprozessor 14 separate Baueinheit. Sie enthält beispielsweise elektronische Gatterlogik, mit der logische Verknüpfungen realisierbar sind. Die Umschalteinrichtung 23 kann beispielsweise auch ein FPGA oder eine sonstige programmierbare elektrische Logik enthalten. Es ist möglich, dass - anders als beim Ausführungsbeispiel - eine Umschalteinrichtung zusätzlich zu einer CPU, eventuell auch zusätzlich zu einem oder mehreren Schnittstellenmodulen, in einen Mikroprozessor integriert ist.

Die Mikroprozessoranordnung 10 wird durch ein Betriebssystem 27 gesteuert, das im Speicher 15 abgelegt ist. Unter der Kontrolle des Betriebssystems 27 werden beispielsweise Anwendungsprogramm-Module 28, 29 zur Steuerung und/oder Überwachung der Peripherieeinheiten 11, 12 ausgeführt. Die Anwendungsprogramm-Module 28, 29 bilden eine Anwendungssoftware, deren Befehlscode vom Mikroprozessor 14 ausgeführt wird. Beim Start der Mikroprozessoranordnung 10 wird zunächst das Betriebssystem 27 aus dem Speicher 15 in den Mikroprozessor geladen und von diesem ausgeführt. Anschließend werden die Anwendungsprogramm-Module 28, 29 geladen und ausgeführt.

Der Speicher 15 enthält nicht-flüchtigen Speicher 30, beispielsweise sogenanntes Flash Memory und/oder EPROM, sowie flüchtigen Speicher 31, der beispielsweise RAM-Module enthält.

Das Betriebssystem 27 sowie die Anwendungsprogramm-Module 28, 29 sind im nicht-flüchtigen Speicher 30 abgelegt, so dass sie im Speicher 15 dauerhaft gespeichert sind und auch nach einer Unterbrechung der Stromversorgung für die Mikroprozessoranordnung 10 unmittelbar beim Start bereitstehen. Beim Ausführungsbeispiel ist auch die Zuordnungstabelle 13 im nicht-flüchtigen Speicher 30 abgelegt. Es wäre aber vorliegend auch ohne Weiteres möglich, die Zuordnungstabelle 13 im flüchtigen Speicher 31 abzulegen, da dieser beim Ausführungsbeispiel durch eine separate Spannungsversorgungseinheit 32 mit Spannung versorgt wird, so dass der Inhalt des flüchtigen Speichers 31 auch bei einer Unterbrechung der Spannungsversorgung für die Mikroprozessoranordnung 10 erhalten bleibt. Die Spannversorgungseinheit 32 enthält beispielsweise einen oder mehrere Kondensatoren, elektrische Akkumulatoren oder dergleichen.

Die Mikroprozessoranordnung 10 wird über Kontakte 33 der Kontaktanordnung 20 mit einer elektrischen Versorgungsspannung 34 versorgt. Die Kontakte 33 sind mit einer Spannungsaufbereitungseinheit 35 verbunden, die zum Beispiel Pufferkondensatoren, Spannungskonstanter oder dergleichen enthält. Über schematisch dargestellte Leitungen 36 versorgt die Spannungsaufbereitungseinheit 35 die Komponenten der Mikroprozessoranordnung 10, beispielsweise den Mikroprozessor 14 und die Spannungsversorgungseinheit 32, mit elektrischer Versorgungsspannung.

Die Mikroprozessoranordnung 10 ist über ein Bedienterminal 37, beispielsweise einen Personal-Computer, bedienbar und/oder konfigurierbar. Das Bedienterminal ist über Verbindungen 38 an Kontakte 39 der Kontaktanordnung 20 angeschlossen. Über die Kontakte 39 kann das Schnittstellenmodul 19, das beispielsweise ein Ethernet-Schnittstellenmodul oder ein UART-Schnittstellenmodul ist, Daten zum Bedienterminal 37 senden und Daten von diesem empfangen. Die Verbindungen 38 können beispielsweise auch über das Internet führen. Für die Kommunikation zwischen dem Schnittstellenmodul 19 und dem Bedienterminal 37 wird beispielsweise das HTTP-Protokoll (Hypertext Transfer Protocol), das Kermit-, YMODEM oder ZMODEM-Protokoll verwendet.

Beispielsweise können über das Bedienterminal 37 die Anwendungsmodule 28, 29 in den Speicher 15 geladen werden. Ferner kann mit Hilfe des Bedienterminals 37 die Zuordnungstabelle 13 modifiziert werden.

Zur Modifikation der Zuordnungstabelle 13 ist bei der Mikroprozessoranordnung 10 ein Bedienmodul 40 vorgesehen, das in das Betriebssystem 27 integriert ist. Prinzipiell könnte das Bedienmodul 40 auch beispielsweise in der Art eines Anwendungsprogramm-Moduls vom Betriebssystem 27 ausgeführt werden. Jedenfalls enthält das Bedienmodul 40 Programmcode, der vom Mikroprozessor 14 ausgeführt wird. Das Bedienmodul 40 liest die in der Zuordnungstabelle 13 enthaltenen Daten aus und übermittelt sie an ein Terminalmodul 41 des Bedienterminals 37. In umgekehrter Richtung sendet das Terminalmodul 41 die eventuell modifizierte Zuordnungstabelle 13 oder einzelne modifizierte Daten für die Zuordnungstabelle 13 an das Bedienmodul 40, welches dann gemäß den übermittelten Daten die Zuordnungstabelle 13 modifiziert oder, wenn diese noch keine Inhalte aufweist, initialisiert. Das Bedienmodul 14 stellt beispielsweise ein sogenanntes API (Application Program Interface) bereit.

Das Bedienmodul 40 kann die Zuordnungstabelle 13 beispielsweise HTML-codiert an das Terminalmodul 41 übermitteln (HTML=Hypertext Markup Language). Das Terminalmodul 41 kann in diesem Fall beispielsweise ein sogenannter Browser sein, der den vom Bedienmodul 40 übermittelten HTML-Code auswertet und dementsprechend die Zuordnungstabelle 13 anzeigt. Dabei ist es möglich, das die Zuordnungstabelle 13 als Formular angezeigt wird, an dem Modifikationen der Inhalte der Zuordnungstabelle 13 eingebbar sind. Die Modifikationen übermittelt das Terminalmodul 41 dann an das Bedienmodul 40, welche die im Speicher 15 abgelegte Zuordnungstabelle 13 entsprechend modifiziert. Neben dieser komfortablen Browsergestützten Variante ist es aber auch möglich, das in einer einfacheren Variante das Terminalmodul 41 die Daten der Zuordnungstabelle 13 beispielsweise als Textdatei vom Bedienmodul 40 erhält. Die Textdatei ist dann z.B. mittels de Terminalmoduls 41 oder einem mit diesem zusammenwirkenden Editor modifizierbar. Anschließend wird die Textdatei mit der modifizierten Tabelle 13 wieder an das Bedienmodul 40 übermittelt, welches die Tabelle 13 entsprechend modifiziert im Speicher 15 ablegt.

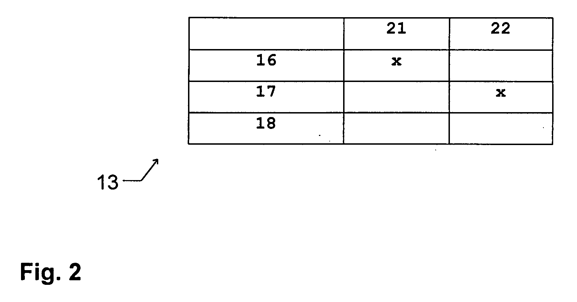

Die Umschalteinrichtung 23 wird gemäß den in der Zuordnungstabelle 13 enthaltenen Daten konfiguriert, das heißt, entsprechend dieser Daten werden die Schnittstellenmodule 16 bis 18 den Kontakten 21, 22 zugeordnet. Beispielsweise ist das Schnittstellenmodul 16 den Kontakten 21 zugeordnet und das Schnittstellenmodul 17 den Kontakten 22. In der Tabelle gemäß Figur 2 ist dies durch "X" in den für die Schnittstellenmodul 16 und 17 vorgesehenen und entsprechend mit "16" und "17" markierten Zeilen bzw. den für die Kontakte 21, 22 stehenden, mit "21", "22" bezeichnete Spalten verdeutlicht. Beispielsweise kann das Bedienmodul 40 die Umschalteinrichtung 23 gemäß der Zuordnungstabelle 13 einstellen. Die Umschalteinrichtung 23 verkörpert dann sozusagen die Zuordnungstabelle 13, was durch eine in gestrichelten Linien gezeichnete Zuordnungstabelle 13' angedeutet ist.

Eine andere Variante zur Modifikation/Konfiguration der Umschalteinrichtung 23 ist, dass beispielsweise mit Hilfe des Mikroprozessors 14 Adressangaben in der Umschalteinrichtung 23 modifiziert werden. Dabei werden beispielsweise bei den Adressen für die Kontakte 21 die Adressen der Verbindungsleitungen 24 und bei den Adressen der Kontakte 22 die Adressen der Verbindungsleitungen 25 eingetragen. Dies ist durch einen Pfeil 42 angedeutet.

Die Mikroprozessoranordnung 10 ist beim Ausführungsbeispiel als Ein-Chip-Mikroprozessoranordnung ausgestaltet. Beispielsweise ist sie in ein sogenanntes DIL-Gehäuse integriert. Wenn die Kontaktanordnung 20 beispielsweise 32 Kontakte enthält, wird ein derartiges Gehäuse als DIL 32-Gehäuse bezeichnet.

Weitere Varianten der Erfindung sind ohne weiteres möglich.

Beispielsweise könnten auch die Kontakte 39 über die Umschalteinrichtung 23 einem der Schnittstellenmodule 16 bis 19 zuordenbar sein. Wenn in einem solchen Fall allerdings die Zuordnungstabelle 13 falsch konfiguriert/programmiert ist, das heißt, dass das zu Konfigurationszwecken notwendige Schnittstellenmodul 19 keinem der Kontakte 21, 22, 39 zugeordnet ist, könnte die Mikroprozessoranordnung 10 nicht mehr von außen bedienbar sein. Für einen solchen Fall ist vorzugsweise eine Reset-Funktion vorgesehen, bei der beispielsweise in einem vorgegebenen Zeit-Zyklus elektrische Versorgungsspannung an die Kontakte 33 angelegt wird. Bei einer derartigen Reset-Funktion lädt das Bedienmodul 40 eine in der Figur nicht dargestellte Basis-Zuordnungstabelle in die Umschalteinrichtung 23, so dass das zu Konfigurationszwecken erforderliche Schnittstellenmodul mit vorbestimmten Kontakten der Kontaktanordnung 20 verbunden wird.

## Patentansprüche

1. Mikroprozessoranordnung mit mindestens einem Mikroprozessor (14) und einem ersten und mindestens einem zweiten Schnittstellenmodul (16-18;19), über das der mindestens eine Mikroprozessor (14) Daten senden und/oder empfangen kann, und mit einer Kontaktanordnung (20), über die elektrische Verbindungen zu der Mikroprozessoranordnung (10) herstellbar sind, **dadurch gekennzeichnet, dass** sie eine Umschalteinrichtung (23) enthält, über die mindestens ein Kontakt der Kontaktanordnung (20) wahlweise dem ersten oder dem mindestens einen zweiten Schnittstellenmodul (16-18;19) in Abhängigkeit einer modifizierbaren Zuordnungstabelle (13; 13') zuordenbar ist.

2. Mikroprozessoranordnung nach Anspruch 1, **dadurch gekennzeichnet, dass** die Umschalteinrichtung (23) elektronische Schaltkreise enthält, die gemäß der Zuordnungstabelle (13; 13') programmierbar sind.

3. Mikroprozessoranordnung nach Anspruch 1 oder 2, **dadurch gekennzeichnet, dass** die Zuordnungstabelle (13; 13') mit Hilfe des Mikroprozessors (14) modifizierbar ist.

4. Mikroprozessoranordnung nach einem der vorhergehenden ' Ansprüche, **dadurch gekennzeichnet, dass** die Umschalteinrichtung (23) eine vom Mikroprozessor (14) separate Einheit ist.

5. Mikroprozessoranordnung nach einem der vorhergehenden Ansprüche, **dadurch gekennzeichnet, dass** der Mikroprozessor (14) zur Ausführung von Befehlscode von Anwendungssoftware (28, 29) vorgesehen ist, und dass die Umschalteinrichtung (23) von der Anwendungssoftware (28, 29) separat ist.

6. Mikroprozessoranordnung nach Anspruch 5, **dadurch gekennzeichnet, dass** die Umschalteinrichtung (23) durch die Anwendungssoftware (28, 29) zum Empfangen und/oder Senden von Daten nutzbar ist.

7. Mikroprozessoranordnung nach einem der vorhergehenden Ansprüche, **dadurch gekennzeichnet, dass** die Zuordnungstabelle (13; 13') in der Umschalteinrichtung (23) abgelegt ist, insbesondere durch die jeweilige Schalteinstellung der Umschalteinrichtung (23) repräsentiert wird.

8. Mikroprozessoranordnung nach einem der vorhergehenden Ansprüche, **dadurch gekennzeichnet, dass** die Zuordnungstabelle (13; 13') zumindest teilweise in einem flüchtigen Speicher (31) der Mikroprozessoranordnung (10) abgelegt ist, wobei dem flüchtigen Speicher (31) eine separate Spannungsversorgungseinheit zum Erhalten von in dem flüchtigen Speicher (31) abgelegten Informationen zugeordnet ist.

9. Mikroprozessoranordnung nach einem der vorhergehenden Ansprüche, **dadurch gekennzeichnet, dass** die Zuordnungstabelle (13; 13') zumindest teilweise in einem nicht-flüchtigen (30) Speicher der Mikroprozessoranordnung (10) abgelegt ist.

10. Mikroprozessoranordnung nach einem der vorhergehenden Ansprüche, **dadurch gekennzeichnet, dass** das erste und/oder das mindestens eine zweite Schnittstellenmodul (16-18;19) integral mit dem Mikroprozessor (14) verbunden sind.

11. Mikroprozessoranordnung nach einem der vorhergehenden Ansprüche, **dadurch gekennzeichnet, dass** die Mikroprozessoranordnung (10) ein Bedienmodul (40) enthält, mit der die Zuordnungstabelle (13; 13') modifizierbar ist.

12. Mikroprozessoranordnung nach Anspruch 11, **dadurch gekennzeichnet, dass** das Bedienmodul (40) einen Bestandteil eines Betriebssystems (27) der Mikroprozessoranordnung (10) bildet.

13. Mikroprozessoranordnung nach Anspruch 12, **dadurch gekennzeichnet, dass** das Betriebssystem (27) in einem nicht-flüchtigen Speicher (30) der Mikroprozessoranordnung (10) abgelegt ist.

14. Mikroprozessoranordnung nach einem der vorhergehenden Ansprüche, **dadurch gekennzeichnet, dass** sie als integrierte Ein-Chip-Mikroprozessoranordnung (10) ausgestaltet ist, deren Komponenten Bestandteile eines einzigen elektronischen Bausteins bilden.

15. Mikroprozessoranordnung nach einem der vorhergehenden Ansprüche, **dadurch gekennzeichnet, dass** die überwiegende Anzahl der Kontakte der Kontaktanordnung (20) durch die Umschalteinrichtung (23) dem ersten und/oder dem mindestens einen zweiten Schnittstellenmodul (16-18;19) zuordenbar ist.
